(19) Europäisches Patentamt
European Patent Office
Office européen des brevets

(11) **EP 0 505 075 B1**

(12) **EUROPEAN PATENT SPECIFICATION**

(45) Date of publication and mention
of the grant of the patent:
**13.03.1996   Bulletin 1996/11**

(51) Int Cl.6: **G01B 7/02**, G01B 7/28,
G01B 21/08

(21) Application number: **92302026.7**

(22) Date of filing: **10.03.1992**

(54) **Calibration method for inspecting the wall thickness of containers**

Kalibrierungsverfahren zur Prüfung der Wanddicke von Behältern

Méthode de calibrage pour contrôler l'épaisseur des parois de conteneur

(84) Designated Contracting States:
**DE FR GB IT**

(30) Priority: **19.03.1991 US 675099**

(43) Date of publication of application:
**23.09.1992   Bulletin 1992/39**

(73) Proprietor: **Emhart Glass Machinery
Investments Inc.
Wilmington, Delaware 19801 (US)**

(72) Inventor: **Baker, Russ J.
Horseheads, New York 14845 (US)**

(74) Representative: **Randall, John Walter et al
Emhart Patents Department
Emhart International Ltd.
177 Walsall Road
Birmingham B42 1BP (GB)**

(56) References cited:
**US-A- 4 553 217           US-A- 4 870 342
US-A- 4 996 658**

## Description

The present invention relates to systems for inspecting the wall thickness of formed glass containers.

State of the art systems, for example, that disclosed in US-A-4 996 658, sense the wall thickness of formed glass containers and issue a voltage signal representative of that sensed thickness. Calibration standards are available in a limited number of diameters and each set of calibration standards provides four different reference voltage locations. Where the bottle to be formed is 3 1/2" [8.89 cm] in diameter, for example, an operator can gauge from two to four of these reference locations on the 3 1/2"" [8.89 cm] standard and equate these to voltages. The control, based on this information, can define an equation for converting voltage to wall thickness.

Where, however, the formed bottle has a diameter different than a calibration standard diameter the operator has to guess what the thickness will be for a given voltage reading and this guessing process has been very difficult in practice.

It is accordingly an object of the present invention to provide a straight forward approach to calibrate a conventional wall thickness inspection system.

The present invention provides a method of calibrating a wall thickness inspection apparatus having a sensor for producing a voltage representative of the thickness of a sensed wall of a glass container comprising the steps of

(a) presenting a standard container having a known calibration standard thickness to the apparatus
(b) measuring the voltage representative of the known thickness
(c) calculating the equivalent thickness of a non-standard container by the formula

Equivalent thickness = ([Calibration Standard Diameter  in mm - Container Diameter in mm] x 0.0079 + 1) X Calibration Standard thickness

(d) entering the equivalent thickness and the representative voltage in control means of the apparatus to provide a reference point

repeating steps a, b, c and d at least once using the inputted reference points to provide a curve of thickness against sensed voltage for the non standard container.

There now follows a description, to be read with reference to the accompanying drawings, of a preferred method of calibrating a wall thickness inspection apparatus.

In the accompanying drawings

Figure 1 is an oblique view of the inspection station of a glass container inspection machine;
Figure 2 is a front view of the CRT screen of the computer which controls the inspection station shown in Figure 1; and
Figure 3 is a logic diagram illustrating the invention.

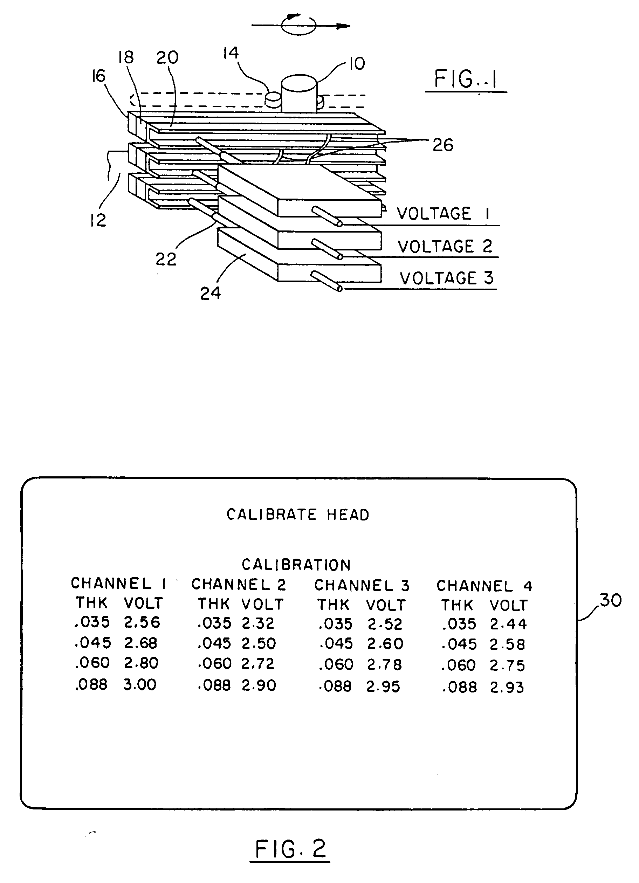

The glass container inspection machine has a station for testing a formed container or bottle (not shown - for calibration purposes a glass standard 10 will be tested) which is supported by a support plate 12 and which is advanced along the support plate 12 by a bottle carrier 14. During its displacement past the test station, the carrier 14 forces the bottle against a number (three as illustrated in Figure 1 for purpose of clarity, but four can be used) of sensors in the form of parallel horizontally extending, vertically spaced capacitance sensing strips 16 which are secured to resilient foam strips 18 mounted on suitable brackets 20. The brackets are connected by posts 22 to corresponding head oscillator assembly housings 24. Each oscillator receives a capacitance signal from its associated capacitance sensing strip via a calibrated cable 26 and generates a continuous voltage signal which is supplied to a computer.

It has been discovered that an equation can be defined that will define the thickness of a non-standard bottle which when sensed by a sensor will result in the generation of a voltage signal equal to the voltage signal generated as a result of sensing the standard by the same sensor. This defined thickness is referred to as the "calibration thickness" or "equivalent thickness". This "calibration thickness" is a function of the container diameter (which is different than the diameter of one of the standards) and the thickness of the calibration standard. An algorithm which accurately represents this relationship for U.S. standard measures (inches) is:

Calibration Thickness = [(((Calibration Standard Diameter in inches - Container Diameter in inches) X 0.2) + 1] X Calibration Standard Thickness in mils,
For the Metric System this equation is :
Calibration Thickness = [(((Calibration Standard Diameter in millimeters - Container Diameter in millimeters) X 0.0079) + 1] X Calibration Standard Thickness in millimeters.

The following example shows how to use the calibration formula to compute a calibration thickness. The calculation here is for the first line under Channel 1 on the Calibrate Head Screen 30 of the controller.

Calibration standards are glass tubes of standard diameter and known thickness. In this example the calibration standards are 2 1/2 inches [6.35 cm] in diameter. A first calibration standard has indicated portions of thickness .037" [.094 cm] and .062" [.157 cm], a second calibration standard has indicated portions of thickness .047" [.119 cm] and .072" [.183 cm].

STEP 1

Compute the difference between the container diameter and the Calibration Standard diameter.

a. Calibration Standard Diameter in inches (millimeters)         2.5 (63.5 mm)
b. Container Diameter in inches         2.75 (69.85mm) -(mm)
c. Subtract Line b. from Line a.
   (The result may be a negative number)        -0.25 (-6.35mm)

STEP 2

Compute the thickness to be entered on the Calibrate Head Screen.

a. Multiply by 0.2 (.0079) and add 1         .950 (.9498)
b. Calibration Standard Thickness in mils (mm)         .037 (.940)
c. Multiply Line a. by Line b.
   Round to the nearest thousandth.
   This is the calibration thickness to be entered on the Calibrate Head Screen        .035 (.893)

The operator enters the calculated calibration thickness, i.e. .035in or .893 mm against channel 1, and then places the calibration standard against the sensor with the equivalent standard thickness (i.e. .037in, .940 mm) against the sensor and measures the output signal, which is 2.56v. Consequently, for this sensor on the non-standard container a thickness of .035in (.893mm) is calculated to give an output signal of 2.56v.

This process will be repeated at least one more time and preferably three more times to define four different calibration thicknesses for the first channel. This will then be repeated for each channel properly to calibrate the sensor. The computer can then, based on this data, define a curve used to convert voltage to wall thickness.

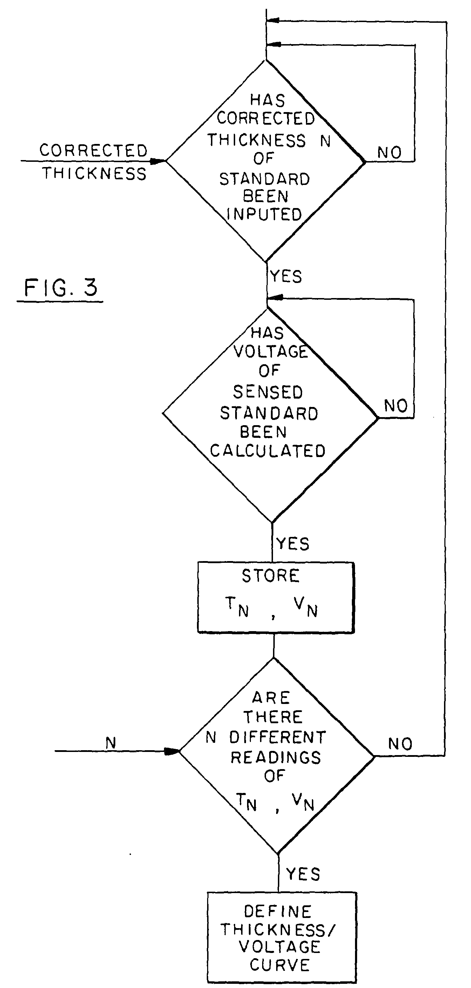

Ideally, the actual bottle should be the size of the standard +/- one inch (2.54 cm). Figure 3 illustrates this sequence.

**Claims**

1.  A method of calibrating a wall thickness inspection apparatus having a sensor for producing a voltage representative of the thickness of a sensed wall of a glass container
       comprising the steps of

       (a) presenting a standard container having a known calibration standard thickness to the apparatus
       (b) measuring the voltage representative of the known thickness
       (c) calculating the equivalent thickness of a non-standard container by the formula
                         Equivalent thickness = ([Calibration Standard Diameter
               in mm - Container Diameter in mm] x 0.0079 + 1) x  Calibration Standard thickness
       (d) entering the equivalent thickness and the representative voltage in control means of the apparatus to provide a reference point
           repeating steps a, b, c and d at least once using the inputted reference points to provide a curve of thickness against sensed voltage for the non standard container.

2.  A method according to claim 1 wherein at least four reference points are inputted to the control system for each sensor apparatus.

**Patentansprüche**

1.  Verfahren zum Kalibrieren einer Wanddicke-Prüfvorrichtung mit einem Sensor zur Abgabe einer Spannung, die der Dicke der gemessenen Wandung eines Glasbehälters entspricht, indem man

(a) in die Vorrichtung einen Normalbehälter mit bekannter Kalibriernormaldicke einsetzt,

(b) die die bekannte Dicke darstellende Spannung mißt,

(c) die äquivalente Dicke eines nicht normgerechten Behälters nach der Formel

äquivalente Dicke = ([Durchmesser des Kalibriernormals in mm - Behälterdurchmesser in mm] x 0,0079 + 1) X Kalibriernormaldicke

berechnet,

(d) die äquivalente Dicke und die repräsentierende Spannung in die Steuerung der Vorrichtung eingibt, um einen Bezugspunkt zu erzeugen, und

unter Verwendung der eingegebenen Bezugspunkte die Schritte (a), (b), (c) und (d) mindestens einmal wiederholt, um für den nicht normgerechten Behälter eine Kurve der Dicke als Funktion der erfaßten Spannung zu erzeugen.

2. Verfahren nach Anspruch 1, bei dem man für jede Fühleranordnung mindestens vier Bezugspunkte in die Steuerung eingibt.

**Revendications**

1. Procédé de calibrage d'un appareil d'inspection d'épaisseur de paroi ayant un capteur pour produire une tension représentative de l'épaisseur d'une paroi mesurée d'un récipient en verre comprenant les étapes de

(a) présentation à l'appareil d'un récipient standard ayant une épaisseur standard de calibrage connue

(b) mesure de la tension représentative de l'épaisseur connue

(c) calcul de l'épaisseur équivalente d'un récipient non standard, par la formule

Epaisseur équivalente = ([diamètre standard de calibrage en mm - diamètre de récipient en mm)] x 0,0079 + 1) x épaisseur standard de calibrage

(d) entrée de l'épaisseur équivalente et de tension représentative dans un moyen de commande de l'appareil pour fournir un point de référence,

répétition des étapes

répétition des étapes a, b, c et d au moins une fois à l'aide des points de référence entrée, pour fournir une courbe de l'épaisseur par rapport à la tension mesurée pour le récipient non standard.

2. Procédé selon la revendication 1, dans lequel au moins quatre points de référence sont entrés dans le système de commande pour chaque appareil capteur.

FIG.-1

CALIBRATE HEAD

CALIBRATION

| CHANNEL 1 | | CHANNEL 2 | | CHANNEL 3 | | CHANNEL 4 | |
|---|---|---|---|---|---|---|---|
| THK | VOLT | THK | VOLT | THK | VOLT | THK | VOLT |
| .035 | 2.56 | .035 | 2.32 | .035 | 2.52 | .035 | 2.44 |
| .045 | 2.68 | .045 | 2.50 | .045 | 2.60 | .045 | 2.58 |
| .060 | 2.80 | .060 | 2.72 | .060 | 2.78 | .060 | 2.75 |
| .088 | 3.00 | .088 | 2.90 | .088 | 2.95 | .088 | 2.93 |

FIG. 2

FIG. 3

```
                              ┌──────────────┐
                              │     HAS      │
                              │  CORRECTED   │
CORRECTED ──────────────────▶│ THICKNESS N  │──── NO
THICKNESS                     │     OF       │
                              │  STANDARD    │
                              │    BEEN      │
                              │   INPUTED    │
                              └──────────────┘
                                     │
                                    YES
                                     │
                              ┌──────────────┐
                              │     HAS      │
                              │   VOLTAGE    │
                              │     OF       │
                              │   SENSED     │──── NO
                              │  STANDARD    │
                              │    BEEN      │
                              │  CALCULATED  │
                              └──────────────┘
                                     │
                                    YES
                                     │
                              ┌──────────────┐
                              │    STORE     │
                              │  $T_N$ , $V_N$  │
                              └──────────────┘
                                     │
                              ┌──────────────┐
                              │     ARE      │
                              │    THERE     │
         N ──────────────────▶│ N DIFFERENT  │──── NO
                              │   READINGS   │
                              │     OF       │
                              │  $T_N$ , $V_N$  │
                              └──────────────┘
                                     │
                                    YES
                                     │
                              ┌──────────────┐
                              │   DEFINE     │
                              │  THICKNESS/  │
                              │   VOLTAGE    │
                              │    CURVE     │
                              └──────────────┘
```